# EUROPÄISCHE PATENTSCHRIFT

(11) **EP 1 449 744 B1**
(45) Veröffentlichungstag und Bekanntmachung des Hinweises auf die Patenterteilung: **30.08.2006**
(21) Anmeldenummer: 04001908.5
(22) Anmeldetag: 29.01.2004
(51) Int. Cl.: B62D 6/02, B62D 1/16

(54) **Überlagerungslenkung für ein Kraftfahrzeug**
Superposition steering for a motor vehicle
Superposition de direction pour un véhicule à moteur

(30) Priorität: 21.02.2003 DE 10307475
(43) Veröffentlichungstag der Anmeldung: 25.08.2004
(73) Patentinhaber: Bayerische Motoren Werke Aktiengesellschaft, 80788 München (DE)
(72) Erfinder: Fleck, Reidar, 80995 München (DE)

(56) Entgegenhaltungen:
- EP-A- 1 138 576
- WO-A-02/02389
- US-A- 4 739 855
- US-A- 6 135 233
- US-B1- 6 302 441

## Beschreibung

Die Erfindung betrifft eine Überlagerungslenkung für ein Kraftfahrzeug, mit einem Überlagerungsgetriebe, mit dem einem vom Fahrer mittels seiner Lenkhandhabe vorgegebenem Lenkwinkel ein von einem geeignet angesteuerten Aktuator vorgegebener Lenkwinkel überlagert werden kann, und wobei der in diesem Überlagerungsgetriebe gebildete Summen-Lenkwinkel die Eingangsgröße für ein Lenkgetriebe bildet, dessen Ausgangsgröße an den lenkbaren Rädern des Kraftfahrzeugs umgesetzt wird. Zum bekannten Stand der Technik wird insbesondere auf die US-A-6 135 233 verwiesen, die die merkmale des oberbergriffs des Anspruchs 1 aufweist.

Eine dem Fachmann grundsätzlich bekannte sog. Überlagerungslenkung enthält ein Additionsgetriebe, welches auch und hier im weiteren als Überlagerungsgetriebe bezeichnet wird, und das in den Lenkungsstrang eines Kraftfahrzeugs integriert ist. Mit einer Überlagerungslenkung besteht bekanntermaßen die Möglichkeit, zusätzliche Lenkwinkel zu erzeugen, die in beliebiger Richtung parallel zu den vom Fahrer des Fahrzeugs vorgegebenen Lenkwinkeln an den lenkbaren Rädern des Kraftfahrzeugs umgesetzt werden. Diese zusätzlichen Lenkwinkel werden dabei von einem sog. Aktuator oder Stellmotor erzeugt, der hierfür insbesondere von einer elektronischen Steuereinheit geeignet angesteuert wird und mittels eines geeigneten Übertragungsgliedes auf das Überlagerungsgetriebe einwirkt. Bspw. kann es sich beim Überlagerungsgetriebe um ein zweistufiges Planetengetriebe handeln, wobei bevorzugt der Planetenträger über einen Schneckentrieb von einem Elektromotor als Aktuator geeignet verlagert wird.

Derartige Planetengetriebe sind oftmals so ausgelegt, dass deren sog. Standübersetzung den Wert "1" besitzt, d.h. dass das Übersetzungsverhältnis zwischen dem Getriebeeingang und dem Getriebeausgang bei stillstehendem Planetenträger, d.h. allg. nicht aktivem Aktuator "1:1" beträgt. Dabei ist der Getriebeeingang mit der Lenkhandhabe des Fahrers, üblicherweise einem Lenkrad, verbunden, während der Getriebeausgang mit dem (Eingangs-)Ritzel eines nachgeschalteten Lenkgetriebes, bei welchem es sich bspw. um ein Zahnstangen-Lenkgetriebe handeln kann, verbunden ist. Eine Standübersetzung vom Wert "1" bedeutet also, dass bei nicht aktivem Aktuator eine Lenkbewegung des Fahrers im Verhältnis "1:1" zum Eingang des Lenkgetriebes, dessen Ausgang letztlich die lenkbaren Räder des Fahrzeugs positioniert, übertragen wird. Dabei weist dieses Lenkgetriebe selbst eine Übersetzung ins indirekte auf, wobei das gewählte Übersetzungsverhältnis auch vom Fahrzeugtyp und der gewünschten Lenkcharakteristik abhängig ist. Bei Personenkraftwagen liegt dieses Übersetzungsverhältnis üblicherweise in der Größenordnung von "13:1" bis 18:1", wobei die Relation "Lenkradwinkel" : "Radlenkwinkel" angegeben ist.

Zurückkommend auf das Überlagerungsgetriebe einer Überlagerungslenkung eines Kraftfahrzeugs sind hierfür auch Bauarten bekannt, deren Standübersetzung ungleich "1:1" ist, so bspw. das sog. Plusplanetengetriebe. Hier liegt bei nicht aktivem Aktuator, d.h. wenn in das Überlagerungsgetriebe vom Aktuator kein zusätzlicher Lenkwinkel eingeleitet wird, im Lenkungsstrang des Kraftfahrzeugs ein sog. Gesamt-Übersetzungsverhältnis vor, das sich mathematisch als Produkt aus dem Standübersetzungsverhältnis des Überlagerungsgetriebes und dem Übersetzungsverhältnis des diesem nachgeschalteten Lenkgetriebes darstellt. Bspw. kann das Überlagerungsgetriebe eine Übersetzung ins indirekte und somit ein Übersetzungsverhältnis von "1:0.8" aufweisen. Wirkt dann dieses Überlagerungsgetriebe mit einem gängigen Lenkgetriebe eines Personenkraftwagens, das ein Übersetzungsverhältnis von "15:1" besitzt, zusammen, so ergibt sich ein Gesamt-Übersetzungsverhältnis von "18,75:1", und somit eine übliche, eher indirekte, träge Lenkcharakteristik. Dabei sei an dieser Stelle ausdrücklich darauf hingewiesen, dass sich die beispielhaft genannten Zahlenwerte für die Übersetzungsverhältnisse im Lenkungsstrang auf übliche, im öffentlichen Straßenverkehr bewegte Personenkraftwagen beziehen. Grundsätzlich ist jedoch die vorliegende Erfindung nicht auf diesen Anwendungsbereich beschränkt, sondern kann bei Lenkanlagen beliebiger Fahrzeuge in gleicher Weise zur Anwendung kommen.

Eine Überlagerungslenkung kann in einem Kraftfahrzeug aus verschiedenen Gründen bzw. im Hinblick auf unterschiedliche Funktionen vorgesehen sein; eine besonders vorteilhafte Funktion besteht jedoch darin, dass hiermit eine variable Lenkübersetzung erzielt werden kann. Die Lenkübersetzung kann dabei in weiten Grenzen, die insbesondere vom Dynamikverhalten des Aktuators (bspw. elektromotorischen Antriebs) abhängig sind, variiert werden. Dies bietet also die Möglichkeit, dem Fahrer für nahezu alle Fahrsituationen eine optimale Lenkübersetzung darzustellen. An Kraftfahrzeugen, die nicht mit einer Überlagerungslenkung ausgerüstet sind, stellt hingegen die Auswahl und Festlegung der Lenkübersetzung üblicherweise einen notwendigen Kompromiss dar. Dabei wird zumeist die Lenkübersetzung eher indirekter und somit weniger agil gewählt, damit sich das Fahrzeug bei hohen Fahrgeschwindigkeiten nicht zu unruhig verhält. Wie weiter oben bereits angedeutet wurde, liegt das Übersetzungsverhältnis im Lenkungsstrang bei einer relativ indirekten Lenkung üblicherweise in der Größenordnung von "16:1" bis "18:1".

Wenn nun mit einer Überlagerungslenkung ein in weiten Grenzen variables Übersetzungsverhältnis bereit gestellt werden kann, so kann dieses insbesondere von der Fahrgeschwindigkeit des Fahrzeugs abhängig gemacht werden, wobei bei sehr niedrigen Fahrgeschwindigkeiten ein Gesamt-Übersetzungsverhältnis in der Größenordnung von "8:1" erwünscht sein kann und bei hohen Fahrgeschwindigkeiten ein "übliches" Übersetzungsverhältnis von bspw. "16:1". Letzteres bedingt für den Fahrer des Fahrzeugs, wenn er bislang nur übliche Fahrzeuge ohne Überlagerungslenkung gewohnt war, keine Umstellung, während die vorgeschlagene sehr direkte Übersetzung bei extrem niedrigen Fahrgeschwindigkeiten bspw. beim Einparken und Rangieren sehr komfortabel ist. Bei der Auslegung einer Überlagerungslenkung wird nun der Aktuator derart ausgewählt, dass er mit seinem Dynamikverhalten diese Übersetzungs-Spreizung darstellen kann.

Hiermit soll nun aufgezeigt werden, wie das weiter oben beschriebene sog. Gesamt-Übersetzungsverhältnis im Lenkungsstrang bei nicht aktivem Aktuator, d.h. das Standübersetzungsverhältnis des Überlagerungsgetriebes und das Übersetzungsverhältnis des diesem nachgeschalteten Lenkgetriebes einzeln und in ihrem Zusammenwirken in idealer Weise ausgelegt werden kann (= Aufgabe der vorliegenden Erfindung).
Die Lösung dieser Aufgabe ist für eine Überlagerungslenkung nach dem Oberbegriff des Anspruchs 1 dadurch gekennzeichnet, dass das Überlagerungsgetriebe mit einem Übersetzungsverhältnis in der Größenordnung von 1:1,25 ausgelegt und derart verbaut ist, dass sich an dessen Ausgang bei nicht aktiviertem Aktuator ein Summen-Lenkwinkel ergibt, der größer als der vom Fahrer vorgegebene Lenkwinkel ist und dass das Gesamt-Übersetzungsverhältnis des nicht vom Aktuator angesteuerten Überlagerungsgetriebes und des ein Übersetzungsverhältnis in der Größenordnung von 15:1 aufweisenden Lenkgetriebes in der Größenordnung von 12:1 liegt und somit annähernd um ein Drittel niedriger ist als das Übersetzungsverhältnis des Lenkgetriebes eines vergleichbaren Kraftfahrzeugs ohne Überlagerungsgetriebe.

Wie erläutert wurde, ist mittels eines Überlagerungsgetriebes in einer Kfz.-Überlagerungslenkung ein variables Gesamt-Übersetzungsverhältnis erzielbar, das bspw. zwischen den Werten "8:1" und "16:1" praktisch jeden beliebigen Wert annehmen kann. Dieser Bereich zwischen diesen beispielhaft genannten Grenzwerten, die insbesondere auch durch das Dynamikverhalten des das Überlagerungsgetriebe beaufschlagenden Aktuators bestimmt sind, wird hier auch als Übersetzungs-Spreizung bezeichnet. Und für die soeben genannten Grenzwerte, d.h. für das maximal erzielbare Übersetzungsverhältnis und für das minimal erzielbare Übersetzungsverhältnis wird auch der Begriff "Grenz-Übersetzungsverhältnis(se)" verwendet.

Nun sollen die Übersetzungsverhältnisse der einzelnen Getriebe in der Überlagerungslenkung, d.h. einerseits die sog. Standübersetzung des Überlagerungsgetriebes und andererseits die Übersetzung des Lenkgetriebes, dessen Ausgangsgröße als Radlenkwinkel an den lenkbaren Rädern umgesetzt wird, derart gewählt werden oder sein, dass das Gesamt-Übersetzungsverhältnis bei nicht aktivem Aktuator, das sich mathematisch als Produkt aus dem Standübersetzungsverhältnis und dem Übersetzungsverhältnis des Lenkgetriebes darstellt, im wesentlichen in der Mitte zwischen den genannten Grenz-Übersetzungsverhältnissen liegt. Für die weiter oben beispielhaft genannten Grenz-Übersetzungsverhältnisse von "8:1" und "16:1" ergibt sich somit ein Gesamt-Übersetzungsverhältnis bei nicht aktivem Aktuator in der Größenordnung von "12:1".

Weiter oben wurde bereits angegeben, welches (Gesamt)-Übersetzungsverhältnis üblicherweise, d.h. bei Kraftfahrzeugen ohne Überlagerungslenkung, gewählt wird, nämlich bspw. "15:1" oder "16:1". Hierbei handelt es sich also praktisch um das in der Überlagerungslenkung maximal erzielbare Übersetzungsverhältnis. Naturgemäß muss dann das erfindungsgemäß im wesentlichen in der Mitte zwischen den beiden Grenz-Übersetzungsverhältnissen liegende Gesamt-Übersetzungsverhältnis einer erfindungsgemäßen Überlagerungslenkung erheblich unterhalb dieses für Fahrzeuge ohne Überlagerungslenkung üblichen Wertes liegen. Nach in der Fachwelt herrschender Meinung sind derart geringe Übersetzungsverhältnisse und demzufolge derart direkt wirkende Lenkungen weniger gut geeignet. Entgegen dem Vorurteil des Fachmann wird hier jedoch vorgeschlagen, das sog. Gesamt-Übersetzungsverhältnis bei nicht aktivem Aktuator, welches für den Fahrer des Fahrzeugs bei einem Systemausfall des Aktuators durchaus unter allen Fahrbedingugen relevant werden kann, wie angegeben festzulegen, weil damit eine Vielzahl von Vorteilen erzielt werden kann.

Ein wesentlicher Vorteil des erfindungsgemäßen Vorschlags besteht darin, dass bei einem Systemausfall der für den Fahrer feststellbare Sprung der Lenkwinkelübersetzung relativ gering bleibt. Betrug nämlich vor einem System-Ausfall bei hohen Fahrzeuggeschwindigkeiten - (dieser Fall ist besonders kritisch) - das mittels des Aktuators eingestellte Gesamt-Übersetzungsverhältnis bspw. "16:1", so stellt sich nun bei einem Systemausfall das beispielhaft genannte Übersetzungsverhältnis "12:1" ein. Dieser Sprung ist für den Fahrer des Fahrzeugs weniger störend, als wenn sich das Übersetzungsverhältnis von "8:1" einstellen würde. Von Vorteil ist eine erfindungsgemäße Auslegung aber auch im Dauerbetrieb der Überlagerungslenkung, also wenn der Aktuator zuverlässig arbeitet und aktiv ist. Dann nämlich sind die dynamischen Anforderungen an den Antrieb bzw. Aktuator der Überlagerungslenkung in beiden Drehrichtungen gleich groß und damit insgesamt minimiert, was sich positiv auf Bauraumbedarf, Gewicht und Energiebedarf des Antriebs bzw. Aktuators auswirkt. Vorteilhafterweise können mit der erfindunsgemäßen Auslegung die erforderlichen Drehzahlen des Antriebs bzw. Aktuators minimiert werden, was sich auch vorteilhaft auf das dem Aktuator nachgeschaltete Getriebe (bspw. in Form eines Schneckentriebs) auswirkt, und zwar hinsichtlich Geräuschentwicklung und Reibungsverlusten. Damit kann also auch der Wirkungsgrad des Systems gesteigert werden.

Eingangs wurde bereits erläutert, dass als Überlagerungsgetriebe ein solches zum Einsatz kommen kann, das bei nicht aktivem Aktuator ein Übersetzungsverhältnis ungleich "1:1" besitzt, also eine sog. Standübersetzung ungleich "1" aufweist. Hier wird nun vorgeschlagen, ein solches Überlagerungsgetriebe derart auszulegen und zu verbauen, dass der vom Fahrer vorgegebene Lenkwinkel ins direkte übersetzt wird und sich somit bei nicht aktiviertem Aktuator ein Summen-Lenkwinkel ergibt, der größer als der vom Fahrer vorgegebene Lenkwinkel ist. Auf die weiter oben mehrmals genannten Zahlenwerte zurückkommend wurde bspw. von einem Überlagerungsgetriebe gesprochen, dessen Stand-Übersetzung "1:0.8" beträgt. Wird nun dieses Überlagerungsgetriebe umgekehrt im Lenkungsstrang verbaut, so ergibt sich ein Übersetzungsverhältnis von "1:1,25" und zusammen mit dem nachgeschalteten gängigen Lenkgetriebe, dessen Übersetzungsverhältnis "15:1" beträgt, ein Gesamt-Übersetzungsverhältnis bei nicht aktivem Aktuator mit dem Wert "12:1", was dem erfindungsgemäß gewünschten Wert entspricht.

An einem im öffentlichen Straßenverkehr bewegten Kraftfahrzeug mit einem Lenkrad als Lenkhandhabe kann somit nach erfindungsgemäßer Auslegung das Gesamt-Übersetzungsverhältnis des nicht vom Aktuator angesteuerten Überlagerungsgetriebes und des Lenkgetriebes im wesentlichen um ein Drittel niedriger sein als das Übersetzungsverhältnis des Lenkgetriebes eines vergleichbaren Kraftfahrzeugs ohne Überlagerungsgetriebe, und zwar entgegen der herrschenden Meinung der Fachwelt, da mit dieser bei einem Ausfall des Aktuators doch relativ direkten Übersetzung der Fahrer weniger verunsichert wird als bei üblicher Übersetzungsauslegung, und es kann gleichzeitig eine Vielzahl von Vorteilen erzielt werden.

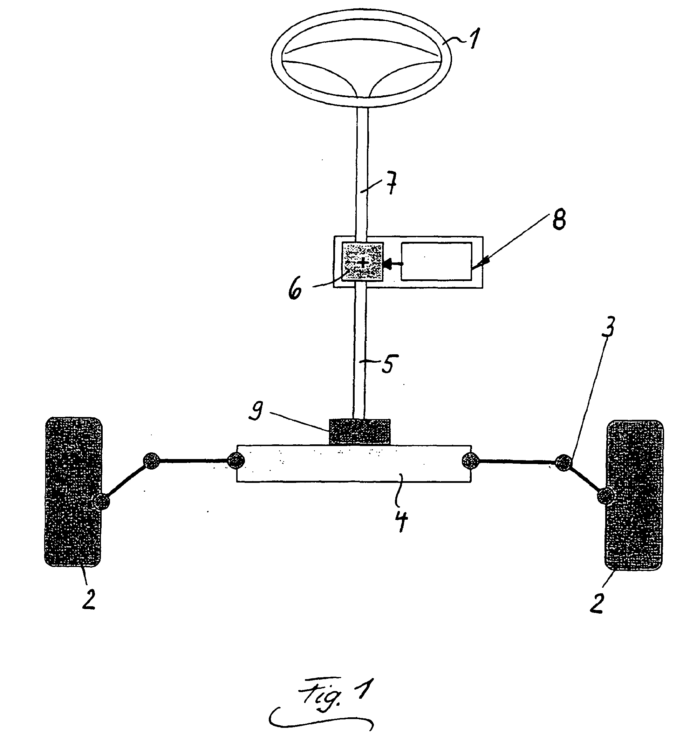

Die beigefügte **Figur 1** zeigt zur Erläuterung einer Überlagerungslenkung sowie zur Definition der Lenkwinkel und Übersetzungsverhältnisse wesentliche Bauelemente hiervon an einem Kraftfahrzeug, wobei mit der Bezugsziffer 1 das vom Fzg.-Fahrer als Lenkhandhabe bediente Lenkrad gekennzeichnet ist, während die lenkbaren Vorder-Räder dieses PKW's die Bezugsziffer 2 tragen. Diese sind über Spurhebel 3 mit der Ausgangsseite eines Lenkgetriebes 4 verbunden, dem eingangsseitig eine Lenkwelle 5 zugeordnet ist, die von einem Überlagerungsgetriebe 6 ausgeht. Eine mit dem Lenkrad 1 drehfest verbundene Lenkspindel 7 liefert die erste Eingangsgröße für dieses Überlagerungsgetriebe 6, nämlich den vom Fahrer in Form eines Lenkwinkels bzw. Lenkradwinkels vorgegebenen Lenkwunsch, während eine zweite Eingangsgröße mittels eines Aktuators 8 derart vorgegeben werden kann, dass dem genannten Lenkradwinkel ein weiterer Lenkwinkel überlagert werden kann. Der entsprechende Summen-Lenkwinkel wird dann an der Lenkwelle 5 umgesetzt bzw. kann mit einem Summenlenkwinkel-Sensor 9 erkannt werden. Eine weitere Veränderung erfährt dieser Summenlenkwinkel in Form einer Übersetzung im Lenkgetriebe 4 sowie über die sog. kinematischen Lenkübersetzung in den Spurhebeln 3. Bekanntlich ist hier auch noch die dem Fachmann bekannte Ackermann-Beziehung einzuhalten, jedoch wird für die vorliegende Erläuterung der Einfachheit halber von einem für beide Räder 2 gültigen Radlenkwinkel gesprochen, der sich aus dem genannten Summen-Lenkwinkel unter Berücksichtigung des Übersetzungsverhältnisses im Lenkgetriebe 4, dem auch noch die kinematische Lenk-Übersetzung in den Spurhebeln 3 zugerechnet wird bzw. in der diese kinematische Lenk-Übersetzung enthalten ist, ergibt.

Entsprechend den weiter oben genannten Zahlenwerten liegt das Übersetzungsverhältnis des nicht vom Aktuator 8 angesteuerten Überlagerungsgetriebes 6 in der Größenordnung von "1:1,25" (Lenkradwinkel : Summenlenkwinkel), so dass der vom Fahrer vorgegebene Lenkwinkel (=Lenkradwinkel) ins direkte übersetzt wird. Das Übersetzungsverhältnis des Lenkgetriebes 4 inclusive der sog. kinematischen Lenkübersetzung in den Spurhebeln 3 betrage 15:1 (Summenlenkwinkel : Radlenkwinkel), so dass das Gesamt-Übersetzungsverhältnis des nicht vom Aktuator 8 angesteuerten Überlagerungsgetriebes 6 und des diesem nachgeschalteten Lenkgetriebes 4 bei "12:1" liegt.

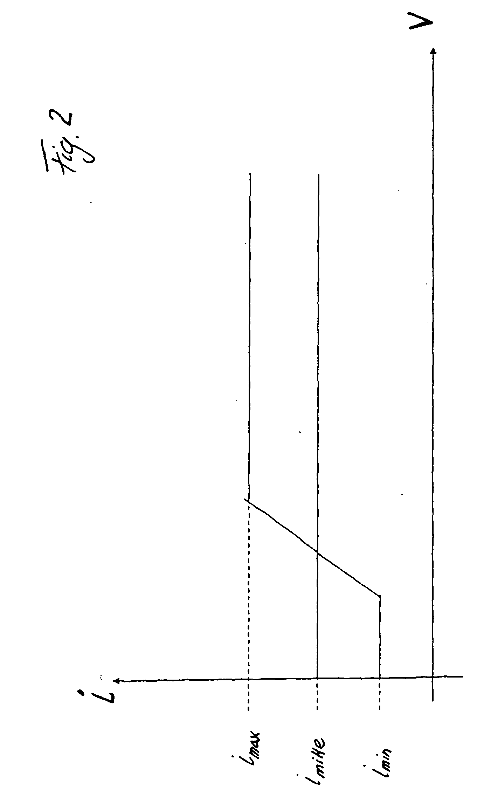

Die beigefügte **Figur 2** zeigt als Diagramm, wie über der Fahrgeschwindigkeit V des Kraftfahrzeugs/PKW's (auf der Abszisse aufgetragen) das genannte Gesamt-Übersetzungsverhältnis i verändert werden kann, das auf der Ordinate aufgetragen ist und sich als Quotient aus dem Lenkradwinkel und dem Radlenkwinkel darstellt. Ein maximales sog. Grenz-Übersetzungsverhältnis iₘₐₓ, das im wesentlich durch das Dynamikverhalten des Aktuators 8 bestimmt ist, wird bei höheren Fahrgeschwindigkeiten V eingestellt, während ein minimales Grenz-Übersetzungsverhältnis iₘᵢₙ, das (ebenfalls) im wesentlich durch das Dynamikverhalten des Aktuators 8 bestimmt ist, bei niedrigen Fahrgeschwindigkeiten eingestellt wird. Bei nicht aktivem Aktuator 8 soll nun ein Gesamt-Übersetzungsverhältnis iₘᵢₜₜₑ vorliegen, das im wesentlichen in der Mitte zwischen den beiden durch geeignete Ansteuerung des Aktuators 8 erzielbaren Grenz-Übersetzungsverhältnissen iₘₐₓ und iₘᵢₙ, nämlich dem mit aktiver Überlagerungslenkung erzielbaren maximalem Gesamt-Übersetzungsverhältnis iₘₐₓ und dem mit aktiver Überlagerungslenkung erzielbaren minimalen Gesamt-Übersetzungsverhältnis iₘᵢₙ liegt.

## Patentansprüche

1. Überlagerungslenkung für ein Kraftfahrzeug, mit einem Überlagerungsgetriebe, mit dem einem vom Fahrer mittels seiner als Lenkrad ausgebildeten Lenkhandhabe vorgegebenem Lenkwinkel ein von einem geeignet angesteuerten Aktuator vorgegebener Lenkwinkel überlagert werden kann, so dass der in diesem Überlagerungsgetriebe gebildete Summen-Lenkwinkel die Eingangsgröße für ein Lenkgetriebe bildet, dessen Ausgangsgröße an den lenkbaren Rädern des Kraftfahrzeugs umgesetzt wird, und wobei das Gesamt-Übersetzungsverhältnis des nicht vom Aktuator angesteuerten Überlagerungsgetriebes und des Lenkgetriebes derart festgelegt ist, dass es im wesentlichen in der Mitte zwischen den beiden durch Ansteuerung des Aktuators erzielbaren Grenz-Übersetzungsverhältnissen, nämlich dem mit aktiver Überlagerungslenkung erzielbaren maximalen und minimalen Übersetzungsverhältnis liegt, **dadurch gekennzeichnet, dass** das Überlagerungsgetriebe mit einem StandÜbersetzungsverhältnis in der Größenordnung von 1:1,25 ausgelegt und derart verbaut ist, dass sich an dessen Ausgang bei nicht aktiviertem Aktuator ein Summen-Lenkwinkel ergibt, der größer als der vom Fahrer vorgegebene Lenkwinkel ist und dass das Gesamt-Übersetzungsverhältnis des nicht vom Aktuator angesteuerten Überlagerungsgetriebes und des ein Übersetzungsverhältnis in der Größenordnung von 15:1 aufweisenden Lenkgetriebes in der Größenordnung von 12:1 liegt und somit annähernd um ein Drittel niedriger ist als das Übersetzungsverhältnis des Lenkgetriebes eines vergleichbaren Kraftfahrzeugs ohne Überlagerungsgetriebe.

## Claims

1. A superposition steering system for a motor vehicle, comprising a superposition gear whereby a steering angle set by the driver, using a steering handle in the form of a steering wheel, can be overlaid by a steering angle set by a suitably operated actuator, so that the sum steering angle formed in the superposition gear constitutes the input variable for a steering gear, the output variable of which is applied to the steerable wheels of the vehicle, and wherein the total transmission ratio of the steering gear and of the superposition gear when not operated by the actuator is fixed so that it lies substantially in the middle between the two limiting transmission ratios obtainable by operating the actuator, that is the maximum and minimum transmission ratio obtainable when the superposition steering system is active, **characterised in that** the superposition gear is designed with a level transmission ratio of the order of 1 : 1.25 and is constructed so that when the actuator is inoperative the superposition gear outputs a sum steering angle greater than the steering angle set by the driver, and the total transmission ratio of the superposition gear when not operated by the actuator and of the steering gear, which has a transmission ratio of the order of 15 : 1, is of the order of 12 : 1 and consequently about a third lower than the transmission ratio of the steering gear in a comparable motor vehicle without a superposition gear.

## Revendications

1. Direction à superposition pour un véhicule automobile, avec une boîte d'engrenages de superposition, un angle de braquage prédéfini par un actionneur commandé de manière appropriée étant superposé à un angle de braquage prédéfini par le conducteur au moyen de son volant de direction, l'angle de braquage total formé dans cette boîte d'engrenages de superposition constituant la grandeur d'entrée d'une boîte de transmission dont la grandeur de sortie est convertie au niveau des roues directrices du véhicule automobile, et le rapport de démultiplication total de la boîte d'engrenages de superposition non commandée par l'actionneur et de la boîte de transmission étant déterminé de telle sorte qu'il est situé sensiblement au milieu entre les deux rapports de multiplication limites que l'on peut obtenir par une commande appropriée de l'actionneur, à savoir les rapports de démultiplication totaux maximal et minimal possibles avec la direction à superposition active,
**caractérisée en ce que**
la boîte d'engrenages de superposition présentant un rapport de démultiplication à l'arrêt de 1:1,25 est conçue et construite de telle sorte qu'il en résulte à sa sortie avec l'actionneur non activé un angle de braquage total supérieur à l'angle de braquage prédéfini par le conducteur, et que le rapport de démultiplication total de la boîte d'engrenages de superposition non commandée par l'actionneur et de la boîte de transmission présentant un rapport de démultiplication de l'ordre de 15:1 est de l'ordre de 12: 1, et donc inférieur d'environ un tiers au rapport de démultiplication de la boîte de transmission d'un véhicule automobile comparable sans boîte d'engrenages de superposition.
